# EUROPÄISCHE PATENTSCHRIFT

(11) **EP 0 941 567 B1**
(45) Veröffentlichungstag und Bekanntmachung des Hinweises auf die Patenterteilung: **16.08.2001**
(21) Anmeldenummer: 97945658.9
(22) Anmeldetag: 27.11.1997
(51) Int. Cl.: H02K 1/04, H01B 7/42

(54) **ÜBERZUGSMITTEL ZUR HERSTELLUNG EINER ELEKTRISCH ISOLIERENDEN BESCHICHTUNG AUF ELEKTROSTAHLBLECH**
COATING AGENT FOR PRODUCING AN ELECTRIC INSULATING COATING ON AN ELECTRO STEEL SHEET
AGENT DE RECOUVREMENT POUR LA PRODUCTION D'UN REVETEMENT ELECTRO-ISOLANT SUR UNE TOLE D'ACIER ELECTRIQUE

(30) Priorität: 29.11.1996 AT 207896
(43) Veröffentlichungstag der Anmeldung: 15.09.1999
(73) Patentinhaber: Herberts Austria GmbH, 2353 Guntramsdorf (AT)
(72) Erfinder: WIMMER, Michael, A-2340 Mödling (AT)
(74) Vertreter: Arlt, Edith, Dr.techn.Dipl.Ing.
(86) Internationale Anmeldenummer: AT9700259
(87) Internationale Veröffentlichungsnummer: WO9824164

(56) Entgegenhaltungen:
- US-A- 3 925 313
- US-A- 4 208 464
- US-A- 5 314 984

## Beschreibung

Gegenstand der vorliegenden Erfindung ist ein überzugsmittel zur Herstellung einer elektrisch isolierenden Beschichtung auf Elektrostahlblech.

Es ist bekannt, daß bei der Herstellung von magnetisierbaren Kernen elektrischer Betriebsmittel - wie Transformatoren, Generatoren oder Motoren - einzelne Bleche zu einem massiven Kern gestapelt werden. Diese Elektrostahlbleche müssen gegeneinander elektrisch isoliert werden. Vor dem Stapeln der Bleche muß aus einem kontinuierlichen Elektroband Stückgut in Form von Segmenten gestanzt werden. Als Verbindungsmethode des Blechstapels kann neben Klammern, Nieten und Verschrauben. auch ein Verschweißen erfolgen. Um ideale magnetische Eigenschaften auch nach den genannten thermischen und mechanischen Belastungen zu erhalten, kann ein solcher Eisenkern einer Schlußglühung unterzogen werden.

Beschichtungen von Elektrostahlblech mit der erforderlichen Stanzbarkeit, Schweißbarkeit und Glühbeständigkeit sind aus einer Kombination eines anorganischen und eines organischen Filmbildners aufgebaut und können darüberhinaus auch Pigmente und Füllstoffe enthalten. Derartige Beschichtungen sind als Phosphat- oder Chromattypen am Markt vorhanden und Stand der Technik.Phosphattypen zeigen jedoch eine zu hohe Sprödigkeit, die sich negativ auf die Haftung am Elektrostahlblech auswirkt und zu einer verminderten Stanzfähigkeit der beschichteten Bleche führt. Chromattypen sind unter dem Aspekt der Umweltverträglichkeit problematisch. Beide Systeme weisen außerdem einen pH-Wert im stark sauren Bereich auf, der sich in Form von Korrosionserscheinungen auf den Applikationseinrichtungen negativ auswirkt.

Aufgabe der vorliegenden Erfindung war es, ein überzugsmittel zur Herstellung einer elektrisch isolierenden Beschichtung bereitzustellen, welches die vorgenannten Nachteile der bisherigen Beschichtungssysteme nicht aufweist und ohne Einschränkung schweißbar und glühbeständig ist bei einer guten Stanzbarkeit der beschichteten Elektrostahlbleche.

Gegenstand der vorliegenden Erfindung ist daher ein Überzugsmittel zur Herstellung einer elektrisch isolierenden Beschichtung auf Elektrostahlblech mit guter Stanzbarkeit, Schweißbarkeit, Glühbeständigkeit und einem hohen Isolationswiderstand, welches aus einem metallorganischen und einem organischen Filmbildner sowie gegebenenfalls chemisch inerten anorganischen Pigmenten und/oder Füllstoffen und anderen üblichen Zusätzen, wie Entschäumern, Verlaufmitteln, Katalysatoren und dgl. besteht. Das erfindungsgemäße Überzugsmittel ist dadurch gekennzeichnet, daß die metallorganische Komponente aus vierwertigen Metallsäureestern oder Metallchelatkomplexen der allgemeinen Formel M (OR)₄, worin M Titan oder Zirkon und R gleiche oder verschiedene, geradkettige oder verzweigte, gesättigte oder ungesättigte C₁-C₂₀ Alkylreste oder Chelate, Di- oder Trialkylamin, Di- oder Trialkanolamin, Mono- oder Diglykolat, Acetylacetonat-, Äthylacetoacetat-, oder Ammoniumlactato- und die organische Komponente aus wasserverdünnbaren Polyester-, Acryl-, Acrylcopolymer-, Alkyd-, Phenol- oder Aminoharzen, die neutralisierbare Gruppen aufweisen oder mit Emulgatoren in wässerigem Milieu leicht verteilbar sind, besteht.

Nach einer besonderen Ausführungsform liegt das erfindungsgemäße überzugsmittel als zweikomponentige Zubereitung vor.

Das Aufbringen auf das Substrat erfolgt vorzugsweise durch Walzen oder Spritzen. Das Aushärten der Beschichtung wird bei einer Temperatur zwischen 150 und 450°C, vorzugsweise 250 bis 350°C, während einer Zeitdauer von mindestens 10 sec durchgeführt.

Als organische Bindemittelkomponente eignen sich Kunstharze, wie z.B. Dispersionen auf Basis von Acrylaten, Styrol oder Butadien. Darüber hinaus ist auch eine Kombination der vorgenannten Harze möglich.

Zur Erhöhung der Schichtstärke können anorganische Füllstoffe, wie z.B. keramische, und/oder Pigmente eingesetzt werden. Verwendung finden Füllstoffe und Pigmente, die in Bezug auf ihre chemische Umgebung aber inert sein müssen. Vorzugsweise sind Füllstoffe mit einem durchschnittlichen Korndurchmesser von weniger als 1 µm einzusetzen, da aufgrund der üblichen Schichtstärke von 1 bis 4 µm von derartigen Beschichtungen Füllstoffe mit einem größeren mittleren Korndurchmesser Verlaufstörungen der Beschichtungen verursachen können.

Ein wesentlicher Vorteil besteht darin, daß die mit dem erfindungsgemäßen Überzugsmittel hergestellten Beschichtungen einen hohen Isolationswiderstand aufweisen und eine einwandfreie Schweißnaht mit hoher Geschwindigkeit zum Zusammenhalten der gestapelten Bleche gezogen werden kann. Nach dem Schlußglühen des beschichteten und verbundenen Blechstapels bleibt der Isolationswiderstand auf einem hohen Niveau erhalten. Die Verarbeitung des erfindungsgemäßen Überzugsmittels kann im Gegensatz zu herkömmlichen stark sauren und chromathältigen Beschichtungsmitteln korrosionsarm und weitestgehend gefahrlos erfolgen. Es besteht auch keine Beeinträchtigung der Umwelt, sodaß besondere Vorsichtmaßnahmen bei der Anwendung dieses Beschichtungssystems entfallen können.

Die Erfindung wird im folgenden anhand von Beispielen näher beschrieben, ohne jedoch darauf beschränkt zu sein.

**Beispiel 1**: Einkomponentiger Klarlack auf Basis eines Triäthanolamintitanates mit einem Acrylharz als organisches Bindemittel:
54 Gew.-Teile Triäthanolamintitanat (80 %-ig in Isopropanol)
14 Gew.-Teile eines Acrylharzes
1 Gew.-Teil Dimethyläthanolamin
25 Gew.-Teile vollentsalztes Wasser
werden gemischt.

Zur Verhinderung der Schaumbildung werden 0,5 Gew.-Teile einer grenzflächenaktiven Substanz der Mischung zugesetzt. Um einen guten Verlauf am Blechsubstrat bei der Walzapplikation zu erreichen, können zusätzlich 6 Gew.-Teile Methyldiglykol zugesetzt werden.

Diese Formulierung wurde mittels Walzapplikation auf Elektrostahlblech der Qualität V800-50A aufgetragen und anschließend bei einer Temperatur von 300°C über einen Zeitraum von 30 sec ausgehärtet. Die Trockenschichtstärke betrug 1,5 um ± 0,2 um. Die Eigenschaften der erzeugten Beschichtung sind aus der nachfolgenden Tabelle ersichtlich.

**Beispiel 2:** Einkomponentiger pigmentierter Lack auf Basis eines Triäthanolamintitanates mit einem Acrylharz als organisches Bindemittel:
49 Gew.-Teile Triäthanolamintitanat (80%-ig in Isopropanol) 13 Gew.-Teile eines Acrylharzes
1 Gew.-Teil Dimethyläthanolamin
10 Gew.-Teile hochdisperse Kieselsäure
30 Gew.-Teile vollentsalztes Wasser
werden in einem Dispersionsrührwerk gemischt.

Zur Verhinderung der Schaumbildung werden 0,5 Gew.-Teile einer grenzflächenaktiven Substanz der Mischung zugesetzt. Um einen guten Verlauf am Blechsubstrat bei der Walzapplikation zu erreichen, können zusätzlich 6 Gew.-Teile Methyldiglykol zugesetzt werden.

Die Verarbeitung erfolgte unter den Bedingungen des Beispiels 1. Die Eigenschaften der erzeugten Beschichtung sind aus der nachfolgenden Tabelle ersichtlich.

**Beispiel 3**: Zweikomponentiger pigmentierter Lack auf Basis eines Acetylacetontitanates mit einem mit Melaminharzen vernetzbaren Acrylharz als organisches Bindemittel:

Es werden zwei getrennte Komponenten hergestellt,die im Mischungsverhältnis A:B = 1:2 unmittelbar vor der Verarbeitung gemischt werden. Die Topfzeit dieser Mischung beträgt bei Raumtemperatur 24 h.

### Komponente A:

100 Gew.-Teile eines Titanacetylacetons (75%-ig in Isopropanol)
20 Gew.-Teile eines Dihydroxybis-(ammonium-lactato)-titanates (50%-ig in Wasser)
werden gemischt.

### Komponente B:

24 Gew.-Teile eines Acrylatharzes
2 Gew.-Teile Dimethyläthanolamin
40 Gew.-Teile vollentsalztes Wasser
3 Gew.-Teile eines teilmethylierten Melaminharzes
15 Gew.-Teile Aluminiumsilikat mit einem mittleren Korndurchmesser von unter 2 *µ*m
werden gemischt.

Zur Verhinderung der Schaumbildung wird 1 Gew.-Teil einer grenzflächenaktiven Substanz der Komponente B zugesetzt. Um einen guten Verlauf am Blechsubstrat bei der Walzapplikation zu erreichen, können zusätzlich 3 Gew.-Teile Butyldiglykol der Komponente B zugesetzt werden.

Nach Mischung der Komponenten A und B wurde das Überzugsmittel wie in Beispiel 1 beschrieben verarbeitet. Die Eigenschaften der erzeugten Beschichtung sind aus der nachstehenden Tabelle ersichtlich.

Die gemessenen Eigenschaftswerte der mit den Überzugsmitteln gemäß den Beispielen 1 bis 3 beschichteten Elektrostahlbleche sind in der folgenden Tabelle aufgelistet:
In Zeile 2 ist die Trockenschichtstärke in µm angegeben.
In Zeile 3 ist die Veränderung der Beschichtung bei einem Lösungsmittelwischtest mit Aceton angegeben. Hierbei ist nach 30 maligem Hin- und Her-Wischen eines mit Aceton getränkten Wattebausches die Veränderung der Filmoberfläche beurteilt worden.
In Zeile 4 ist die Haftfestigkeit bzw. Elastizität der Beschichtung angegeben,die nach der Norm ISO 6860 mit dem konischen Dorn gemessen wurde. Als Merkmal ist der Durchmesser der Biegung in mm angegeben, unter dem keine Risse zu beobachten sind.
In Zeile 5 ist der Gitterschnittest angegeben, wobei ein Mehrschneidegerät B nach Norm DIN 53151 verwendet wurde. Die Beurteilung erfolgt von GtO bis Gt5.
In Zeile 6 ist die Korrosionsbeständigkeit nach Norm DIN 50017 angegeben, wobei das beschichtete Blech 8 h einer Atmosphäre von 40°C und 100% rel. Luftfeuchtigkeit ausgesetzt wurde. Über nachfolgende 16 h erfolgte ein Abklingen auf normale Umgebungsbedingungen. Die Rostgradbestimmung erfolgte nach Norm DIN 53210.
In Zeile 7 ist der Isolationswiderstand vor der Glühung mit dem nach Norm ASTM A717-81 genormten Franklin-Tester in der Einheit Ω.cm² angegeben.
Wie in Zeile 7 ist auch in Zeile 8 der Isolationswiderstand angegeben, nur erfolgte die Messung nach dem in Norm DIN 46400/2 beschriebenen Glühprozeß.
In Zeile 9 ist die maximal mögliche Schweißgeschwindigkeit, bei der eine blasen- und lunkerfreie Schweißnaht erzielt werden kann (nach dem Stahl-Eisen-Prüfblatt SEP 1210) angegeben.

| **1** | **Eigenschaft** | **Beispiel 1** | **Beispiel 2** | **Beispiel 3** |
|---|---|---|---|---|
| 2 | Trockenschichtstärke | 1,5 µm ±0,2 | 1,5 µm ±0,2 | 1,5 µm ±0,2 |
| 3 | Lösemittelbeständigkeit 30 mal mit Aceton | keine Veränderung | keine Veränderung | keine Veränderung |
| 4 | Haftfestigkeit mit konischem Dorn ISO 6860 | < 3 mm | < 3 mm | < 3 mm |
| 5 | Gitterschnitt DIN 53151 | Gt0 | Gt0 | Gt0 |
| 6 | Korrosionsbeständigkeit DIN 50017, 53210 | Ri 1 | Ri 1 | Ri 0 |
| 7 | Isolationswiderstand vor dem Glühen ASTM A717-81 | > 50 Ω.cm² | > 50 Ω.cm² | > 100 Ω.cm² |
| 8 | Isolationswiderstand nach dem Glühen DIN 46400/2, ASTM A717-81 | > 20 Ω.cm² | > 20 Ω.cm² | > 50 Ω.cm² |
| 9 | Schweißgeschwindigkeit SEP 1210 | > 1000 mm/min | > 1250 mm/min | > 750 mm/min |

## Patentansprüche

1. überzugsmittel zur Herstellung einer elektrisch isolierenden Beschichtung auf Elektrostahlblech mit guter Stanzbarkeit, Schweißbarkeit, Glühbeständigkeit und einem hohen Isolationswiderstand, welches aus einem metallorganischen und einem organischen Filmbildner sowie gegebenenfalls chemisch inerten anorganischen Pigmenten und/oder Füllstoffen und anderen üblichen Zusätzen, wie Entschäumern, Verlaufmitteln, Katalysatoren und dgl.,besteht, dadurch gekennzeichnet, daß die metallorganische Komponente aus vierwertigen Metallsäureestern oder Metallchelatkomplexen der allgemeinen Formel M (OR)₄, worin M Titan oder Zirkon und R gleiche oder verschiedene, geradkettige oder verzweigte, gesättigte oder ungesättigte C₁-C₂₀ Alkylreste oder Chelate,Di- oder Trialkylamin, Di- oder Trialkanolamin, Mono- oder Diglykolat, Acetylacetonat-, Äthylacetoacetat-, oder Ammoniumlactato- und die organische Komponente aus wasserverdünnbaren Polyester-, Acryl-. Acrylcodolymer-. Alkyd-, Phenol- oder Aminoharzen, die neutralisierbare Gruppen aufweisen oder mit Emulgatoren in wässrigem Milieu leicht verteilbar sind, besteht.

2. überzugsmittel nach Anspruch 1, dadurch gekennzeichnet, daß es als zweikomponentige Zubereitung vorliegt.

3. Überzugsmittel nach Anspruch 1 oder 2, dadurch gekennzeichnet, daß das Aufbringen auf das Substrat durch Walzen oder Spritzen erfolgt.

4. überzugsmittel nach einem der Ansprüche 1 bis 3, dadurch gekennzeichnet, daß die Aushärtung der Beschichtung bei einer Temperatur zwischen 150 und 450°C während einer Zeitdauer von mindestens 10 sec erfolgt.

5. Überzugsmittel nach Anspruch 4, dadurch gekennzeichnet, daß die Aushärtung vorzugsweise bei einer Temperatur von 250 bis 350°C erfolgt.

## Claims

1. Coating agent for producing an electric insulating coating on an electro steel sheet with good punching and welding properties, annealing stability and a high insulating resistance, which consists of an organometallic film former and an organic film former and, if required, chemically inert inorganic pigments and/or fillers and other usual additives, such as antifoaming agents, leveling agents, catalysts and the like, characterized in that the organometallic component consists of tebravalent metallic acid esters or metal-chelate complexes of the general formula M(OR)₄, wherein M stands for titanium or zircon, and R stands for equal or different straight-chained or branched, saturated or unsaturated C₁ - C₂₀ alkyl radicals or chelates, di- or trialkylamine, di- or trialkanolamine, mono- or diglycolate, acetylacetonate-, ethylacetoacetate-, or ammoniumlactato- and the organic component consists of water-dilutable polyester-, acryl-, acrylcopolymer-, alkyd-, phenol- or amino-resins which have neutralizable groups or can be easily dispersed with emulsifiers in an aqueous medium.

2. Coating agent according to claim 1, characterized in that it is present as a two-component preparation.

3. Coating agent according to claim 1 or 2, characterized in that the application to the substrate is by means of rolling or spraying.

4. Coating agent according to any one of claims 1 to 3, characterized in that the hardening-out of the coating takes place at a temperature between 150 and 450°C during a period of at least 10 seconds.

5. Coating agent according to claim 4, characterized in that the hardening-out preferably takes place at a temperature of 250 to 350°C.

## Revendications

1. Agent de recouvrement pour à la production d'un revêtement electro-isolant sur une tôle d'acier électrique présentant une bonne aptitude à l'estampage et au soudage, une bonne stabilité au recuit et une haute résistance d'isolement, constitué d'une matière filmogèns organométallique at d'une matière filmogène organique, éventuellement aussi de pigments et/ou agents de charge chimiquement inertes ainsi que des agents d'addition habituels, tels que antimoussants, agents d'étalement, catalyseurs, etc., caractérisé par le fait que d'une part, les composants organométalliques sont constitués d'esters d'acides métalliques ou de complexes de chélates métalliques tétravalents répondant à la formule générale M (OR)₄, dans laquelle M represente le titane ou le zircon, et R des alkyles C₁-C₂₀ identiques ou différentes, linéaires ou ramifiés, saturés ou insaturés ou chélates, di- ou trialkylamines, di- ou trialcanolamines, mono- ou diglycolates, acétylacétonates, acétoacétates d'éthyle ou lactates d'ammonium et que d'autre part, les composants organiques sont constitués de résines de polyester, résines acryliques, résines de copolymères acryliques, résines alkydes, résines phénoliques ou résines aminiques diluable dans l'eau et présentant des groupes neutralisables ou pouvant être facilement dispersés en milieu aqueux par des agents émulsifiants.

2. Agent de recouvrement selon la revendication 1, caractérisé par le fait qu'il est disponible en préparation à deux composants.

3. Agent de recouvrement selon la revendication 1 ou 2 caractérisé par le fait que l'application sur la base substrat est effectuée par laminage ou par pistolage.

4. Agent de recouvrement selon l'une quelconque, des revendications 1 à 3, caractérisé par le fait que le durcissement de la couche de revêtement est effectué à une température de 150 à 450°C durant une période de minimum 10 sec.

5. Agent de recouvrement selon la revendication 4, caractérisé par le fait que le durcissement est effectué de préférence à une temperature de 250 à 350°C.
